Europäisches Patentamt

European Patent Office

Office européen des brevets

(11) Publication number: **0 083 188**
**A2**

## (12) EUROPEAN PATENT APPLICATION

(21) Application number: 82306788.9

(22) Date of filing: 20.12.82

(51) Int. Cl.³: **C 08 F 299/04**

(30) Priority: 30.12.81 GB 8139009

(43) Date of publication of application:
06.07.83 Bulletin 83/27

(84) Designated Contracting States:
BE DE IT NL SE

(71) Applicant: TIOXIDE GROUP PLC
10 Stratton Street
London W1A 4XP(GB)

(72) Inventor: Goldsbrough, Keith
9 Wellburn Road
Fairfield Stockton on Tees Cleveland(GB)

(72) Inventor: Hodge, John Christopher William
Cotcliffe Lodge Cotcliffe
Northallerton Yorkshire(GB)

(74) Representative: Grundy, Derek George Ritchie et al,
CARPMAELS & RANSFORD 43, Bloomsbury Square
London WC1A 2RA(GB)

(54) Production of veticulated polymer beads.

(57) Vesiculated polymer beads containing a pigment have in the past been produced employing a process using a polyamine base but this has introduced yellowing of the beads and avoidance of its use is desirable.

Accordingly a process has been developed which produces vesiculated polymer beads which have a reduced tendency to be yellow. The new process involves forming an oil phase of the polyester resin containing the pigment which is mixed with a first aqueous phase containing a particular base to form an emulsion to which a second aqueous phase containing an emulsifying agent is then mixed. The dispersion of globules so formed is polymerised by the action of a polymerisation initiator. Preferably the pigment is titanium dioxide pigment.

**0083188**

## PRODUCTION OF VESICULATED POLYMER BEADS

This invention relates to the production of polymer articles and particularly to vesiculated polymer beads.

According to the present invention a process for the manufacture of vesiculated polymer beads comprises

forming an oil phase comprising a cross-linkable water-insoluble carboxyl-containing polyester resin in solution with a monomer copolymerisable therewith and a pigment

forming a first aqueous phase comprising water, a base selected from the class of bases consisting of alkali metal hydroxides, alkali metal salts of weak acids, ammonium hydroxide and ammonium salts of weak acids and a water-soluble inorganic salt to increase the osmotic pressure of said first aqueous phase

mixing the oil phase and the first aqueous phase to form an emulsion of the aqueous phase in the oil phase

forming a second aqueous phase comprising water and an emulsifying agent

mixing the emulsion of the first aqueous phase in the oil phase with the second aqueous phase to form a water-in-oil-in-water emulsion

adding to the emulsion so obtained a polymerisation initiator and initiating cross-linking of the polyester resin with the monomer copolymerisable therewith to form the desired beads.

The process of this invention produces dimensionally stable pigmented vesiculated beads without the necessity to employ a polyamine to stabilise a first emulsion and without the necessity of using a solid metal oxide type base. The use of polyamines introduces an objectionable yellowing of the beads and its avoidance is desirable.

Generally the polyester resin used in the present invention will be unsaturated and may be any such resin which is capable of reaction with an unsaturated organic monomer at temperatures below about $100^{o}C$ to form a rigid crosslinked polymer having suitable physical and chemical properties for bead formation. It is preferred, in the process of the present invention, to use resins formed by the condensation of a dihydric alcohol (or its corresponding oxide) with a proportion of an aliphatic dicarboxylic acid and with a proportion of an aromatic dicarboxylic acid (or the corresponding anhydrides).

Unsaturated polyester resins formed from the condensation of ethylene, propylene, tetra-, penta- or hexamethylene glycols, or their corresponding oxides, with unsaturated dibasic acids such as fumaric or maleic (or the anhydride in the latter case) and with a proportion of an aromatic acid such as isophthalic or phthalic acid (or phthalic anhydride) have been found to be particularly suitable for the present process. The condensation product of propylene glycol; fumaric acid or maleic anhydride and phthalic acid (or the anhydride) is particularly suitable.

It is generally desirable that the proportions of components and the degree of condensation be such that the resulting unsaturated polyester resin has an acid value in the range 5 to 100 (expressed as mgms KOH per gram of resin) and particularly one in the range 10 to 35.

It has also been found advantageous to utilise unsaturated polyester resins having a viscosity in the range 5 to 60 and particularly a viscosity in the range 20 to 40 poise, (when measured as a 70% by weight solution in the unsaturated monomer, e.g. styrene, at $25^{o}C$).

It may also be of advantage to modify the unsaturated polyester resin by the incorporation into the resin of polyethylene oxide chains since such resins also form stable emulsions of the type required by the present invention.

In the process of this invention the polyester resin is initially dissolved in the unsaturated monomer, the latter being present in sufficient quantity to provide the necessary cross-linking of the resin component. The amount of monomer present is normally at least 30% by weight on weight of the resin and is preferably present in an amount in the range 40% to 70%.

The unsaturated monomer in which the resin is dissolved will be substantially insoluble in water and as indicated is capable of copolymerising with the resin to produce a crosslinked product. Generally the unsaturated monomer is an unsaturated aromatic hydrocarbon and preferably is a vinyl aromatic hydrocarbon such as styrene, divinyl benzene, alphamethyl styrene or the mixed monomers available commercially as vinyl toluene. If desired an unsaturated aliphatic co-monomer can be mixed with the unsaturated monomer and typical co-monomers are the esters of acrylic or methacrylic acids such as methyl acrylate, methyl methacrylate, ethyl acrylate and n-butyl acrylate and other polymerisable compounds such as acrylonitrile, vinyl acetate and ethylene glycol dimethacrylate.

A first aqueous phase is prepared by mixing with the water constituent a base and a water-soluble inorganic salt. The inorganic salt is required to increase the osmotic pressure of the solution forming the first aqueous phase. Typical preferred salts are the alkali metal halides such as sodium or potassium chlorides. Other suitable salts are magnesium sulphate, aluminium sulphate and calcium chloride. Generally the concentration of the salt in the first aqueous phase will be from 0.0015 moles per litre to 0.15 moles per litre and preferably the amount of the salt will be from 0.005 moles per litre to 0.03 moles per litre.

As described the first aqueous phase also contains a base. The base is a strong base and is selected from a specified class of bases which is constituted by the alkali metal hydroxides, alkali metal salts of weak acids, ammonium hydroxide and ammonium salts of weak acids. The salts of weak acids may be salts of weak inorganic acids such as the carbonates or may be salts of weak organic acids such as the stearates. Typical bases which have been found to be particularly advantageous are the hydroxides of sodium and potassium, ammonium hydroxide, ammonium carbonate and sodium or potassium stearate.

The total amount of the base added to the first aqueous phase depends on a number of factors but essentially the amount employed in the process of the invention is 0.3 to 10 equivalents of base per carboxyl group of the resin in the oil phase. Preferably the amount of the base is from 0.3 to 2 equivalents per carboxyl group of the resin.

The pigment mixed with the oil phase can be an inorganic or organic pigment and can be white or coloured. Typical inorganic pigments are iron oxide, magnesium titanate or preferably titanium dioxide.

In the case of titanium dioxide this can be anatase or rutile titanium dioxide prepared either by the so-called 'sulphate' process or the 'chloride' process. The pigment can be coated or uncoated. Preferably however the pigment is rutile titanium dioxide having a coating of one or more hydrous oxides which have the effect of improving the pigmentary and other properties of the pigment. The process of the invention is of particular use when the pigment has a coating which tends to dissolve in a strong base since the incorporation of the pigment in the oil phase and the incorporation of the base in the first aqueous phase has been found to reduce such dissolution to an acceptable extent even when the emulsion is prepared by mixing the two phases.

A water-in-oil emulsion is prepared by mixing together the oil phase and the first aqueous phase. Typically the mixing is effected by a high speed internal mixer or other suitable adequate stirring mixer to produce the required emulsion of the first aqueous phase in the oil phase.

The so produced emulsion is then mixed with a second aqueous phase to produce globules of the first emulsion within the second aqueous phase. In fact the globules are formed of the resin and contain within the resin the first aqueous phase which on drying produces hollow vesicles.

The second aqueous phase comprises water and an emulsifying agent to assist in stabilising the globules of resin and an example of such as emulsifying agent is a phenol modified polyalkylene oxide but preferably the emulsifying agent is a partially hydrolysed polyvinylacetate. A typically useful partially hydrolysed polyvinylacetate will have a molecular weight of up to 150,000, say 100,000 and have 85% to 95% of its hydrolysable groups hydrolysed.

The actual amount of emulsifying agent employed depends inter alia, on the volume ratio between the three phases used in the double emulsion process of the invention but usually the amount used will be from 5 grams per litre to 50 grams per litre in the second aqueous phase.

The second aqueous phase can also contain a thickener to assist in the formation of the emulsion of the globules and a typical thickener is hydroxyl ethyl cellulose.

Polymerisation and cross-linking of the resin forming the globules is then initiated by adding to the emulsion a suitable polymerisation initiator such as an organic peroxide, e.g. cumene hydroperoxide, together with an accelerater if desired. After allowing the suspension to rest at usually an elevated temperature of say 45°C to 70°C for an appropriate time beads are obtained having, on drying, an appropriate amount of vesiculation to produce the required degree of opacity. The pigmented beads can have a range of mean volume diameters of say from 1 micron to 25 microns or larger as is desired.

The invention is illustrated in the following Examples

Example 1

An unsaturated polyester resin was prepared by condensation polymerisation of maleic anhydride, phthalic anhydride and propylene glycol in the molar proportion of 3:1:4.5. The product had an acid value of 24 mg KOH per g and a viscosity of 25 poise as a 70% by weight solution in styrene (measured at 25°C).

An oil phase was prepared by milling 178 parts of rutile titanium dioxide pigment in 166 parts of a 50% solution of the unsaturated polyester resin in styrene. 41 parts of styrene were then added to the pigment dispersion in resin.

A water-in-oil emulsion was formed by adding with high speed stirring an aqueous phase consisting of, 0.6 parts of sodium hydroxide, 0.12 parts of sodium chloride and 129 parts of water to 385 parts of the oil phase. 192 parts of this water-in-oil emulsion were added with stirring to a second aqueous phase consisting of 0.45 parts of hydroxy ethyl cellulose, 2.25 parts of 90% hydrolysed polyvinyl acetate, 0.5 parts of an 80% active solution of sodium dihexyl sulfosuccinate, and 180 parts of water. This formed a water-in-oil-in-water emulsion, the particles of which reduced in size to an average diameter of 12 microns on further agitation. The emulsion was then diluted by adding 177 parts of hot water to give a temperature of 50°C in the total mixture. Polymerisation was then initiated by adding 1.25 parts of cumene hydroperoxide, 10 parts of a 2% aqueous solution of diethylene triamine and 2 parts of a 0.9% aqueous solution of ferrous sulphate. The vesiculated bead slurry of 25% solids by weight was then left overnight for the polymerisation reaction to reach completion.

Example 2

Example 1 was repeated except that a 6% by weight solution of sodium stearate was made up in warm water. This was allowed to cool and was then used to make up an aqueous phase of total composition 4.59 parts of sodium stearate, 0.12 parts of sodium chloride and 129 parts of water. This was used instead of the aqueous phase containing 0.6 parts of sodium hydroxide. When the water-in-oil emulsion had been formed it was allowed to stand for 2 hours, then restirred before being used to form the water-in-oil-in-water emulsion.

Example 3

Using the same resin as in Example 1 an oil phase was prepared comprising a 50% solution of the resin in styrene. A water-in-oil emulsion was formed by adding, with high speed stirring, a pre-milled aqueous phase comprising 114 parts of distilled water; 20.5 parts

of a 5% aqueous solution of Calgon PT; 267 parts of a rutile $TiO_2$ pigment and 2.5 parts of diethylene triamine to 309 parts of the oil phase.

177 parts of this water-in-oil emulsion were added with high speed stirring to a second aqueous phase comprising 0.54 parts of hydroxyethyl cellulose; 2.55 parts of 90% hydrolysed polyvinyl acetate and 171 parts of water to form a water-in-oil-in-water emulsion having oil phase globules of an average diameter of 12 microns.

To this emulsion was then added with stirring 131 parts of water at 90°C to give a final emulsion having a temperature of 46°C.

Curing was then commenced by the addition, with stirring, of 1.25 parts of cumene hydroperoxide; 10 parts of a 2% aqueous solution of diethylene triamine and 2 parts of a 0.9% aqueous solution of ferrous sulphate.

The vesiculated bead slurry of 29% solids by weight was left overnight for the polymerisation reaction to reach completion.

('Parts' are parts by weight. 'Calgon' is a Registered Trade Mark).

Examples 1,2 and 3 all produced dimensionally stable beads according to the following test. A very dilute solution of the bead slurry is viewed under a microscope fitted with a graduated eyepiece. Selected beads are sized when wet and again after 2 to 3 hours when they are completely dry. The percentage reduction in diameter of these beads is measured and the average figure is taken as the shrinkage. If the shrinkage is less than 5% the beads are considered dimensionally stable.

|           | % Contrast Ratio | L    | a    | b   | % Shrinkage |
|-----------|------------------|------|------|-----|-------------|
| Example 1 | 81.6             | 95.2 | -0.3 | 1.3 | 2           |
| Example 2 | 82.2             | 95.1 | -0.2 | 1.3 | 0           |
| Example 3 | 81.6             | 95.1 | -0.3 | 1.5 | 0           |

The Contrast Ratios and L, a, b colour parameters were measured on paints made from the beads in the manner described below.

A premix of 7.5 parts of a rutile titanium dioxide; 2.5 parts of water; 13.4 parts of a 3% solution of hydroxyethyl cellulose in water and 76 parts of a 55% solids vinyl co-polymer emulsion was prepared. 50 parts of this premix was added to 60 parts of each bead slurry to form a paint. From the paints thus formed duplex drawdowns were prepared on standard hiding power charts (Sheen Ref 301) using a wire wound applicator giving a wet film thickness of 60 microns.

After the paint films had dried their colour co-ordinates L, a and b (CIELAB 1976) were measured over the white part of the charts using a Gardner XL.23 colourmeter. A full description of the CIELAB system is given in supplement No.2 to CIE Publication No.15 (E - 1.3.1.)1971/(TC - 1.3)1978.

The L value is an indication of brightness, the 'a' value of the redness of the colour and the 'b' value of the yellowness of the colour. A difference of 0.2 units is significant.

The Contrast Ratios were obtained by measuring the reflectances over the black and white areas of the charts using the Y stimulus filter of the Gardner XL23, and substituting in the following equation

$$\text{Contrast Ratio } \% = \frac{\text{Reflectance over black}}{\text{Reflectance over white}} \times 100$$

Thus the beads produced by Examples 1 and 2 were dimensionally stable, of similar opacity, and significantly less yellow than those produced by Example 3.

Example 4

Example 1 was repeated on a larger scale but with an unsaturated polyester resin prepared by condensation polymerisation of fumaric acid, phthalic anhydride and propylene glycol in the molar proportion of 3:1:4.5. This polyester resin had an acid value of 22.5 mg KOH per g and a viscosity at $25^{\circ}C$ of 30 poise as a 70% by weight solution in styrene.

Example 5

Example 3 was repeated on a larger scale using the same polyester resin as used in Example 4.

The vesiculated bead slurries produced in Examples 4 and 5 were tested in a similar manner to those of Examples 1, 2 and 3, except that the duplex drawdown was prepared using a wire wound applicator giving a wet film thickness of 75 microns.

|  | % Contrast Ratio | L | a | b | % Shrinkage |
|---|---|---|---|---|---|
| Example 4 | 91.0 | 95.1 | -0.2 | 1.3 | 2 |
| Example 5 | 91.3 | 95.1 | -0.3 | 1.5 | 0 |

Thus the beads produced by Example 4 were dimensionally stable, of similar opacity, and significantly less yellow than those produced by Example 5.

CLAIMS

1.    A process for the manufacture of vesiculated polymer  beads which comprises

forming an oil phase comprising a cross-linkable water-insoluble carboxyl-containing polyester resin in solution with a monomer copolymerisable therewith

forming a first aqueous phase comprising water and a base

mixing the oil phase and the first aqueous phase to form an emulsion of the aqueous phase in the oil phase

forming a second aqueous phase comprising water and an emulsifying agent

mixing the emulsion of the first aqueous phase in the oil phase with the second aqueous phase to form a water-in-oil-in-water emulsion

adding to the emulsion     so obtained a polymerisation initiator and initiating cross-linking of the polyester resin with the monomer copolymerisable therewith to form the desired beads characterized in that the oil phase contains a pigment, the first aqueous phase includes a water-insoluble inorganic salt to increase the osmotic pressure of said first aqueous phase and the base is an alkali metal hydroxide, an alkali metal salt of a weak acid, ammonium hydroxide or an ammonium salt of a weak acid.

2.    A process according to claim 1 characterized in that the concentration of said water-soluble inorganic salt in the first aqueous phase is from 0.0015 moles per litre to 0.15 moles per litre.

3.    A process according to claim 2 characterized in that the concentration of said salt is from 0.005 moles per litre to 0.03 moles per litre.

4.    A process according to claim 1, 2 or 3 characterized in that said water-soluble inorganic salt is an alkali metal halide, magnesium sulphate, aluminium sulphate or calcium chloride.

5.    A process according to any one of the preceding claims characterised in that the total amount of the base added to the first aqueous phase is from 0.3 to 10 equivalents of base per carboxyl group of the resin and preferably from 0.3 to 2 equivalents per carboxyl group of the resin.

6.    A process according to any one of the preceding claims characterized in that the pigment mixed with the oil phase is iron oxide, magnesium titanate or titanium dioxide.

7.    A process according to any one of the preceding claims characterized in that said polyester resin has an acid value in the range 5 to 100 (expressed as mgms KOH per gram of resin) and a viscosity in the range 5 to 60 poise.

8.    A process according to any one of the preceding claims characterized in that the amount of monomer is at least 30% by weight of the weight of the resin and preferably in the range 40% to 70% by weight on the weight of the resin.

9.    A process according to any one of the preceding claims characterized in that the base is a hydroxide of sodium or of potassium, ammonium hydroxide, ammonium carbonate or. sodium or potassium stearate.

10.     A process according to any one of the preceding claims characterized in that the emulsifying agent is partially hydrolysed polyvinyl acetate with a molecular weight of up to 150,000 and with from 85% to 95% of its hydrolysable groups hydrolysed.